# EUROPÄISCHE PATENTSCHRIFT

(11) **EP 3 053 902 B1**
(45) Veröffentlichungstag und Bekanntmachung des Hinweises auf die Patenterteilung: **27.02.2019**
(21) Anmeldenummer: 15198685.8
(22) Anmeldetag: 09.12.2015
(51) Int. Cl.: C04B 41/87, A47B 77/02

(54) **KERAMISCHER GEGENSTAND UND VERFAHREN ZUR HERSTELLUNG EINES SOLCHEN**
CERAMIC OBJECT AND METHOD FOR PRODUCING SAME
OBJET EN CERAMIQUE ET PROCEDE DE FABRICATION D'UN TEL OBJET

(30) Priorität: 04.02.2015 DE 102015101609
(43) Veröffentlichungstag der Anmeldung: 10.08.2016
(73) Patentinhaber: Duravit Aktiengesellschaft, 78132 Hornberg (DE)
(72) Erfinder: STAMMEL, Thomas, 78132 Hornberg (DE); SANDER, Sebastian, 79183 Waldkirch (DE); GENDRONNEAU, Damien, 77756 Hausach (DE)
(74) Vertreter: Lindner Blaumeier Patent- und Rechtsanwälte

(56) Entgegenhaltungen:
- US-A1- 2009 117 173
- DATABASE WPI Week 199637 Thomson Scientific, London, GB; AN 1996-368014 XP002759349, -& JP H08 175887 A (TOTO LTD) 9. Juli 1996 (1996-07-09)

## Beschreibung

Die Erfindung betrifft einen keramischen Gegenstand, insbesondere einen keramischen Sanitärgegenstand, einen keramischen Küchengegenstand oder einen keramischen Laborgegenstand, und ein Verfahren zur Herstellung eines solchen.

Keramische Gegenstände sind aus keramischen Materialien hergestellte oder keramische Materialien als wesentliche Bestandteile umfassende Gegenstände und seit langer Zeit bekannt. Zu den bekannten Anwendungs- bzw. Verwendungsbereichen entsprechender keramischer Gegenstände zählen insbesondere der Sanitär-, der Küchen- oder Laborbereich.

Insbesondere in den vorstehend genannten Anwendungs- bzw. Verwendungsbereichen können antibakterielle Eigenschaften jeweiliger dort einzusetzender keramischer Gegenstände zweckmäßig oder, etwa im Hinblick auf bestimmte Normen, sogar erforderlich sein.

Bis dato bekannte keramische Gegenstände mit antibakteriellen Eigenschaften weisen bisweilen eine unzureichende und somit verbesserungswürdige antibakterielle Wirkung auf.

Aus JP A08 175 887 A ist ein keramischer Gegenstand bekannt, der eine seine Oberfläche bildende Zinkoxidschicht aufweist, die zusätzlich Silber oder Silberoxid oder ein Salz enthaltend Silber als einen Precursor enthält. Die Beschichtung wird aufgesprüht, wonach bei Brand bei 1100°C erfolgt.

US 2009/117173 A offenbart ein antimikrobielles Glasursystem, dessen oberste Schicht einen hohen Anteil an Zinkoxid enthält.

Der Erfindung liegt die Aufgabe zugrunde, einen demgegenüber, insbesondere im Hinblick auf die antibakteriellen Eigenschaften, verbesserten keramischen Gegenstand anzugeben.

Die Aufgabe wird durch einen keramischen Gegenstand der eingangs genannten Art gelöst, welcher sich dadurch auszeichnet, dass er einen keramischen Grundkörper aufweist, welcher zumindest abschnittsweise eine antibakterielle Oberfläche und/oder eine antibakterielle Oberflächenbeschichtung aufweist, welche einen gewichtsmäßigen Anteil von mehr als 35 Gewichtsprozent Zinkoxid (ZnO) enthält, und dass die antibakterielle Oberfläche und/oder die antibakterielle Oberflächenbeschichtung zusätzlich einen gewichtsmäßigen Anteil von 0,1 - 20 Gewichtsprozent Zinnoxid (SnO₂) enthält, wobei die Oberfläche und/oder die Oberflächenbeschichtung durch einen Brand eines ungebrannten keramischen Grundkörpers mit einer Brandtemperatur in einem Bereich zwischen 1100°C und 1350°C oder durch einen Brand eines vorgebrannten keramischen Grundkörpers mit einer Brandtemperatur in einem Bereich zwischen 650°C und 1350°C erzeugt ist.

Der hierin beschriebene keramische Gegenstand umfasst einen keramischen Grundkörper. Der keramische Grundkörper definiert typischerweise bereits die Geometrie des keramischen Gegenstands, aus welcher sich wiederum der oder allgemein ein Anwendungs- bzw. Verwendungsbereich des keramischen Gegenstands ergibt.

Da es sich bei dem hierin beschriebenen keramischen Gegenstand insbesondere um einen keramischen Sanitär-, Küchen- oder Laborgegenstand handelt, kann die Geometrie des keramischen Grundkörpers beispielsweise eine Toilettenschüssel, ein Waschbecken bzw. einen Waschtisch, ein Spülbecken bzw. einen Spültisch oder ein Laborbecken bzw. einen Labortisch abbilden.

Angesichts der vorstehenden rein beispielhaften Aufzählung sind selbstverständlich andere Geometrien und somit Anwendungs- bzw. Verwendungsbereiche denkbar. Bei dem hierin beschriebenen keramischen Gegenstand kann es sich demnach beispielsweise auch um eine glasierte oder unglasierte Fliese, insbesondere für den Außenbereich, um eine glasierte oder unglasierte Ziegel, insbesondere eine Dachziegel, um ein Geschirrteil, d. h. z. B. eine Tasse, einen Teller, etc., oder um ein Schmuckteil, insbesondere eine Armbanduhr, d. h. insbesondere den eine Uhrzeit anzeigenden Uhrengrundkörper oder um das oder ein Element eines Uhrenarmbands, handeln. Bei den vorgenannten keramischen Gegenständen kann der gewichtsmäßige Anteil an Zinkoxid gegebenenfalls auch unterhalb 35 Gewichtsprozent liegen.

Der keramische Grundkörper weist zumindest abschnittsweise, d. h. gegebenenfalls vollständig, eine antibakterielle Oberfläche und/oder zumindest abschnittsweise, d. h. gegebenenfalls vollständig, eine antibakterielle Oberflächenbeschichtung auf bzw. ist mit einer solchen zumindest abschnittsweise, d. h. gegebenenfalls vollständig, versehen.

Unter einer antibakteriellen Oberfläche ist eine abschnittsweise, d. h. im Bereich der Oberfläche, antibakteriell wirkende Ausbildung des keramischen Grundkörpers zu verstehen. Das den keramischen Grundkörper bildende keramische Material weist hier also zumindest im Bereich der Oberfläche zumindest abschnittsweise antibakterielle Eigenschaften auf. Die antibakteriellen Eigenschaften des keramischen Grundkörpers ergeben sich daraus, dass dieser aus einem antibakteriellen Material gebildet ist oder wenigstens ein antibakterielles Material umfasst. Zur Realisierung antibakterieller Eigenschaften ist es hier nicht zwingend erforderlich, eine zusätzliche antibakterielle Beschichtung auf den keramischen Grundkörper aufzubringen. Selbstverständlich kann eine solche antibakterielle Beschichtung zusätzlich zumindest abschnittsweise auf den keramischen Grundkörper aufgebracht sein.

Unter einer antibakteriellen Oberflächenbeschichtung ist eine zumindest abschnittsweise Beschichtung des keramischen Grundkörpers mit einer antibakteriell wirkenden Oberflächenbeschichtung zu verstehen. Das den keramischen Grundkörper bildende keramische Material ist hier also im Bereich der Oberfläche zumindest abschnittsweise mit einer antibakteriell wirkenden Oberflächenbeschichtung beschichtet bzw. ist eine solche antibakteriell wirkende Oberflächenbeschichtung im Bereich der Oberfläche, auf welche wie zu erwähnen sein wird, bereits zuvor eine Grundbeschichtung aufgebracht sein kann, zumindest abschnittsweise auf den keramischen Grundkörper aufgebracht. Der keramische Grundkörper ist hier also nicht zwingend aus einem antibakteriellen Material gebildet oder umfasst wenigstens ein antibakterielles Material. Die antibakteriellen Eigenschaften der antibakteriellen Oberflächenbeschichtung ergeben sich daraus, dass diese aus einem antibakteriellen Material gebildet ist oder wenigstens ein antibakterielles Material umfasst.

Sowohl für eine entsprechende antibakterielle Oberfläche als auch für eine entsprechende antibakterielle Oberflächenbeschichtung gilt, dass diese einen gewichtsmäßigen Anteil von mehr als 35 Gewichtsprozent Zinkoxid, d. h. insbesondere wenigstens 36 Gewichtsprozent Zinkoxid, als antibakteriellen Bestandteil enthält. Sofern die antibakterielle Oberfläche bzw. die antibakterielle Oberflächenbeschichtung weitere Bestandteile aufweist, beträgt der gewichtsmäßige Anteil von Zinkoxid in der Gesamtzusammensetzung sonach mehr als 35 Gewichtsprozent, insbesondere wenigstens 36 Gewichtsprozent Zinkoxid. Insgesamt addieren sich sämtliche Bestandteile der antibakteriellen Oberfläche bzw. der antibakteriellen Oberflächenbeschichtung selbstverständlich auf eine Gesamtzusammensetzung von 100 Gewichtsprozent.

Im Zusammenhang mit der Entstehung der vorliegenden Erfindung wurde es in Untersuchungen gezeigt, dass gerade gewichtsmäßige Anteile von mehr als 35 Gewichtsprozent Zinkoxid eine hervorragende antibakterielle Wirkung sicherstellen, welche mit gewichtsmäßigen Anteilen von bis zu 35 Gewichtsprozent Zinkoxid nicht erreichbar sind.

In dem Anteilsbereich von mehr als 35 Gewichtsprozent und weniger als 100 Gewichtsprozent Zinkoxid sind sämtliche Gewichtsanteile an Zinkoxid denkbar. Mithin sind insbesondere Gewichtsanteile an Zinkoxid von 36, 37, 38, 39, 40, 41, 42, 43, 44, 45, 46, 47, 48, 49, 50, 51, 52, 53, 54, 55, 56, 57, 58 ,59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 und 99 Gewichtsprozent und zwischen den genannten Gewichtsanteilen liegende Zwischenwerte möglich. Grundsätzlich kann die antibakterielle Wirkung durch Erhöhung des gewichtsmäßigen Anteils an Zinkoxid erhöht werden.

Wie erwähnt, addieren sich sämtliche Bestandteile einer entsprechenden antibakteriellen Oberfläche bzw. einer entsprechenden antibakteriellen Oberflächenbeschichtung stets auf eine Gesamtzusammensetzung von 100 Gewichtsprozent. Ausnahme ist selbstverständlich der nicht erfindungsgemäße Fall einer antibakteriellen Oberfläche bzw. einer antibakteriellen Oberflächenbeschichtung, welche vollständig, d. h. zu 100 %, und somit aus reinem Zinkoxid besteht.

Der gewichtsmäßige Anteil von mehr als 35 Gewichtsprozent Zinkoxid lässt sich ebenso in der Seger-Formel, welche bei keramischen Beschichtungen bzw. Glasuren bekanntermaßen das molare Verhältnis der in der Beschichtung bzw. Glaser enthaltenen Oxide ausdrückt, darstellen. In der Seger-Formel werden die basischen, amphoteren und sauren Oxide einer keramischen Zusammensetzung jeweils in einer Gruppe (Spalte) zusammengefasst. Bezugsgröße ist die Molsumme der basischen Oxide, welche gleich "1" gesetzt wird. Die Seger-Formel erlaubt eine Typisierung von Beschichtungen bzw. Glasuren für bestimmte Zwecke. Übertragen auf die Seger-Formel bedeutet der gewichtsmäßige Anteil von mehr als 35 Gewichtsprozent Zinkoxid einen Anteil an Zinkoxid von mehr als 0,4.

Eine beispielhafte Darstellung einer möglichen Seger-Formel ist nachfolgend für Brandtemperaturen in einem Temperaturbereich zwischen 1150°C und 1300°C dargestellt:

| Basische Oxide | Amphotere Oxide | Saure Oxide |
|---|---|---|
| 0,02 - 0,2 Na₂O | 0,1 - 1 Al₂O₃ | 1,5-3,8 SiO₂ |
| 0,01 - 0,2 Li₂O | | |
| 0,01 - 0,4 K₂O | | |
| 0,01 - 0,15 MgO | | 0,05 - 0,2 ZrO₂ |
| 0,1 - 0,6 CaO | | 0,001 - 0,4 SnO₂ |
| 0,05 - 0,2 BaO | | 0,05 - 0,2 B₂O₃ |
| 0,05 - 0,2 SrO | | 0,005 - 0,35 TiO₂ |
| > 0,4 ZnO | | |
| Σ = 1 | | |

Eine entsprechende antibakterielle Oberflächenbeschichtung kann direkt auf dem keramischen Grundkörper ausgebildet bzw. direkt auf den keramischen Grundkörper aufgebracht sein. Die direkte Aufbringung einer entsprechenden antibakteriellen Oberflächenbeschichtung kann fertigungstechnische Vorteile mit sich bringen. Alternativ kann eine entsprechende antibakterielle Oberflächenbeschichtung auf eine (zuvor) auf dem keramischen Grundkörper ausgebildete bzw. eine (zuvor) auf den keramischen Grundkörper aufgebrachte Grundbeschichtung ausgebildet bzw. aufgebracht sein. Die Aufbringung einer antibakteriellen Oberflächenbeschichtung auf eine entsprechende Grundbeschichtung kann insbesondere in Fällen vorteilhaft sein, in welchen sich eine antibakterielle Oberflächenbeschichtung, z. B. zusammensetzungsbedingt, nicht ohne Weiteres stabil auf dem keramischen Grundkörper aufbringen lässt. Diesem Problem kann durch das "Zwischenschalten" einer Grundbeschichtung, mit welcher die aufzubringende antibakterielle Oberflächenbeschichtung chemisch-physikalisch gut kompatibel ist, begegnet werden. Bei einer entsprechenden Grundbeschichtung kann es sich z. B. um eine im Hinblick auf den jeweiligen Anwendungs- bzw. Verwendungsbereich des keramischen Gegenstands ausgewählte Standardglasur handeln. Für den beispielhaften Fall eines keramischen Sanitärgegenstands kann es sich bei einer entsprechenden Grundbeschichtung sonach z. B. um eine Sanitärstandardglasur, z. B. basierend auf Aluminiumoxid (Al₂O₃) oder Siliziumoxid (SiO₂), handeln.

Eine beispielhafte Darstellung einer möglichen Seger-Formel einer Grundbeschichtung ist nachfolgend für Brandtemperaturen in einem Temperaturbereich zwischen 1150°C und 1300°C gegeben.

| Basische Oxide | Amphotere Oxide | Saure Oxide |
|---|---|---|
| 0,14 Na₂O | 0,39 Al₂O₃ | 3,54 SiO₂ |
| 0,01 K₂O | | |
| 0,09 MgO | | 0,02 B₂O₃ |
| 0,76 CaO | | |
| Σ = 1 | | |

Die Schichtdicke einer entsprechenden antibakteriellen Oberflächenbeschichtung kann, insbesondere nach einem Brand, in einem Schichtdickenbereich zwischen 0,1 mm und 3 mm, insbesondere zwischen 0,25 mm und 1,5 mm, bevorzugt zwischen 0,5 mm und 1 mm, liegen. Untersuchungen konnten zeigen, dass entsprechende Schichtdicken für eine zuverlässige antibakterielle Wirkung der antibakteriellen Oberflächenbeschichtung ausreichend sind. Selbstverständlich sind in diesem Zusammenhang Ausnahmen denkbar, d. h. die Schichtdicken können in Ausnahmefällen unterhalb 0,1 mm bzw. oberhalb 3 mm liegen. Eine entsprechende antibakterielle Oberflächenbeschichtung muss nicht überall eine gleiche Schichtdicke aufweisen, d. h. die Schichtdicke einer antibakteriellen Oberflächenbeschichtung kann ungeachtet von fertigungsbedingten Abweichungen bereichsweise variieren.

Für den, wie beschrieben, denkbaren, nicht erfindungsgemäßen Fall, dass die antibakterielle Oberflächenbeschichtung aus reinem Zinkoxid besteht, liegt die Schichtdicke der antibakteriellen Oberflächenbeschichtung typischerweise in einem Schichtdickenbereich zwischen 0,1 mm und 3 mm, insbesondere zwischen 0,25 mm und 1,5 mm, bevorzugt zwischen 0,5 mm und 1 mm. Der genannte Schichtdickenbereich kann fertigungstechnische Vorteile aufweisen und eine zu starke negative Beeinflussung der optischen Eigenschaften, insbesondere eine zu starke Mattierung, der antibakteriellen Oberfläche bzw. der antibakteriellen Oberflächenbeschichtung verhindern.

Eine entsprechende antibakterielle Oberfläche und/oder eine entsprechende antibakterielle Oberflächenbeschichtung kann zusätzlich Silber, insbesondere mit einem gewichtsmäßigen Anteil von 0,005 - 5 Gewichtsprozent, enthalten. Durch die Zugabe von Silber kann die antibakterielle Wirkung gezielt beeinflusst werden. Das Silber kann in metallischer Form zugegeben sein. Gleichwohl ist auch die Zugabe einer Silberverbindung, wie z. B. Silbercarbonat (Ag₂CO₃), denkbar.

Eine entsprechende antibakterielle Oberfläche und/oder eine entsprechende antibakterielle Oberflächenbeschichtung enthält zusätzlich Zinnoxid (SnO₂) mit einem gewichtsmäßigen Anteil von 0,1 - 20 Gewichtsprozent. Zinnoxid kann als Keimbildner wirken und somit der Ausbildung einer stabilen antibakteriellen Oberflächenbeschichtung zuträglich sein. Ferner kann durch die Zugabe von Zinnoxid die Oberflächenbeschaffenheit der antibakteriellen Oberfläche bzw. der antibakteriellen Oberflächenbeschichtung beeinflusst werden.

Eine entsprechende antibakterielle Oberfläche und/oder eine entsprechende antibakterielle Oberflächenbeschichtung kann zusätzlich Ceroxid (CeO₂), insbesondere mit einem gewichtsmäßigen Anteil von 0,05 - 1 Gewichtsprozent, enthalten. Ähnlich wie Zinnoxid kann auch Ceroxid als Keimbildner wirken und somit der Ausbildung einer stabilen antibakteriellen Oberflächenbeschichtung zuträglich sein. Ferner kann auch durch die Zugabe von Ceroxid die Oberflächenbeschaffenheit der antibakteriellen Oberfläche bzw. der antibakteriellen Oberflächenbeschichtung beeinflusst werden.

Ferner kann eine entsprechende antibakterielle Oberfläche und/oder eine entsprechende antibakterielle Oberflächenbeschichtung zusätzlich Titanoxid (TiO₂), insbesondere mit einem gewichtsmäßigen Anteil von 0,05 - 1 Gewichtsprozent, enthalten. Ähnlich wie Zinnoxid und Ceroxid kann auch Titanoxid als Keimbildner wirken und somit der Ausbildung einer stabilen antibakteriellen Oberflächenbeschichtung zuträglich sein. Ferner kann auch durch die Zugabe von Titanoxid die Oberflächenbeschaffenheit der antibakteriellen Oberfläche bzw. der antibakteriellen Oberflächenbeschichtung beeinflusst werden.

Das in der antibakteriellen Oberfläche bzw. der antibakteriellen Oberflächenbeschichtung enthaltene Zinkoxid liegt typischerweise partikelförmig vor. Über die Partikeleigenschaften, d. h. insbesondere Form, Größe und Verteilung bzw. den Mahlgrad der Partikel, lässt sich die Reaktivität sowie die Schmelzfähigkeit dieser und somit der antibakteriellen Oberflächenbeschichtung insgesamt beeinflussen. In diesem Zusammenhang sind vergleichsweise hohe Mahlgrade, d. h. vergleichsweise feine Mahlungen, zweckmäßig. Entsprechend kann beispielsweise zumindest 3 % des Gesamtanteils an Zinkoxid eine Partikelgröße oberhalb 45 µm aufweisen.

Die Erfindung betrifft ferner ein Verfahren zur Herstellung eines keramischen Gegenstands, insbesondere eines keramischen Gegenstands wie vorstehend beschrieben, welcher keramische Gegenstand einen keramischen Grundkörper aufweist, welcher zumindest abschnittsweise eine antibakterielle Oberfläche und/oder eine antibakterielle Oberflächenbeschichtung aufweist, welche einen gewichtsmäßigen Anteil von mehr als 35 Gewichtsprozent Zinkoxid enthält. Das Verfahren ist durch die folgenden wesentlichen Schritte gekennzeichnet:
- Bereitstellen eines keramischen Grundkörpers,
- Ausbilden einer antibakteriellen Oberflächenbeschichtung auf dem keramischen Grundkörper, welche einen gewichtsmäßigen Anteil von mehr als 35 Gewichtsprozent Zinkoxid und 0,1 - 20 Gewichtsprozent Zinnoxid enthält, und/oder einer antibakteriellen Oberfläche des keramischen Grundkörpers, welche einen gewichtsmäßigen Anteil von mehr als 35 Gewichtsprozent Zinkoxid und 0,1 - 20 Gewichtsprozent Zinnoxid enthält, zur Herstellung des keramischen Gegenstands, wobei ein ungebrannter keramischer Grundkörper verwendet wird und das Ausbilden der antibakteriellen Oberfläche und/oder der antibakteriellen Oberflächenbeschichtung auf dem ungebrannten keramischen Grundkörper durch einen Brand mit einer Brandtemperatur in einem Temperaturbereich zwischen 1100°C und 1350°C durchgeführt wird.

Nachdem in einem ersten Verfahrensschritt ein Bereitstellen eines keramischen Grundkörpers erfolgt, erfolgt in einem nachfolgenden zweiten Verfahrensschritt ein Ausbilden einer antibakteriellen Oberfläche, welche einen gewichtsmäßigen Anteil von mehr als 35 Gewichtsprozent Zinkoxid, insbesondere wenigstens 36 Gewichtsprozent Zinkoxid, enthält, und/oder einer antibakteriellen Oberflächenbeschichtung, welche einen gewichtsmäßigen Anteil von mehr als 35 Gewichtsprozent Zinkoxid, insbesondere wenigstens 36 Gewichtsprozent Zinkoxid, enthält. In dem zweiten Verfahrensschritt wird also im Allgemeinen wenigstens eine Maßnahme zur Ausbildung einer antibakteriellen Oberfläche bzw. einer antibakteriellen Oberflächenbeschichtung durchgeführt. Wie sich im Weiteren ergibt, beinhaltet das Ausbilden der antibakteriellen Oberfläche bzw. der antibakteriellen Oberflächenbeschichtung typischerweise wenigstens einen Brand des keramischen Grundkörpers.

Sämtliche Ausführungen im Zusammenhang mit dem keramischen Gegenstand gelten analog für das Verfahren. Umgekehrt gelten sämtliche Ausführungen im Zusammenhang mit dem Verfahren analog für den herzustellenden bzw. hergestellten keramischen Gegenstand.

Im Rahmen des Verfahrens kann ein ungebrannter keramischer Grundkörper (keramischer Scherben) verwendet werden. Das Ausbilden der antibakteriellen Oberfläche und/oder der antibakteriellen Oberflächenbeschichtung kann entsprechend auf einem ungebrannten keramischen Grundkörper durchgeführt werden.

Insbesondere kann ein ungebrannter keramischer Grundkörper verwendet werden, auf welchem (zuvor) zumindest abschnittsweise eine Grundbeschichtung aufgebracht ist bzw. wird. Eine entsprechende antibakterielle Oberflächenbeschichtung kann sonach auf einer entsprechenden Grundbeschichtung aufgebracht werden. Die vorherige zumindest abschnittsweise Aufbringung einer Grundbeschichtung kann ebenso im Rahmen des hierin beschriebenen Verfahrens erfolgen. Als konkretes Beispiel kann ein ungebrannter keramischer Grundkörper verwendet werden, auf welchem zumindest abschnittsweise eine Grundbeschichtung mit einer Schichtdicke in einem Schichtdickenbereich zwischen 0,5 mm und 3 mm, insbesondere 1 mm und 2 mm, aufgebracht ist bzw. wird.

Die antibakterielle Oberflächenbeschichtung kann im Weiteren mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf die Grundbeschichtung aufgebracht werden. Gegebenenfalls kann die antibakterielle Oberflächenbeschichtung auch mit einer Schichtdicke (deutlich) oberhalb 3 mm auf die Grundbeschichtung aufgebracht werden, so dass sich die vorgenannten Schichtdickenbereiche erst nach einem Brand ergeben.

Wie erwähnt, beinhaltet das Ausbilden der antibakteriellen Oberfläche und/oder der antibakteriellen Oberflächenbeschichtung typischerweise zumindest einen Brand. Konkret kann zum Ausbilden der antibakteriellen Oberfläche und/oder der antibakteriellen Oberflächenbeschichtung ein Brand mit einer Brandtemperatur in einem Temperaturbereich zwischen 1100°C und 1350°C, insbesondere zwischen 1130°C und 1280°C, durchgeführt werden. Über die Brandtemperatur, Branddauer, etc. kann Einfluss auf die konkrete Zusammensetzung der antibakteriellen Oberfläche bzw. der antibakteriellen Oberflächenbeschichtung genommen werden. Der genannte Temperaturbereich zwischen 1100°C und 1350°C, insbesondere zwischen 1130°C und 1280°C, gewährleistet in der Regel eine zuverlässige Ausbildung einer antibakteriellen Oberfläche bzw. einer antibakteriellen Oberflächenbeschichtung. In dem genannten Temperaturbereich ist ein hinreichendes Aufschmelzen eines Beschichtungsmaterials möglich, ohne das dieses, die Aufbringung einer antibakteriellen Oberflächenbeschichtung erschwerend, zu stark verflüssigt.

Alternativ zu dem Ausbilden einer entsprechenden antibakteriellen Oberfläche und/oder einer entsprechenden antibakteriellen Oberflächenbeschichtung auf einem nicht gebrannten keramischen Grundkörper kann das Ausbilden einer entsprechenden antibakteriellen Oberfläche und/oder einer entsprechenden antibakteriellen Oberflächenbeschichtung auf einem vorgebrannten keramischen Grundkörper (keramischer Scherben) durchgeführt werden. Im Rahmen des Verfahrens kann also auch ein vorgebrannter keramischer Grundkörper verwendet werden.

Hierzu vorgesehen ist ein alternatives erfindungsgemäßes Verfahren zur Herstellung eines keramischen Gegenstands in Form eines Sanitär-, Küchen- oder Laborgegenstands, insbesondere eines keramischen Gegenstands nach einem der vorangehenden Ansprüche, welcher einen keramischen Grundkörper aufweist, welcher zumindest abschnittsweise eine antibakterielle Oberfläche und/oder eine antibakterielle Oberflächenbeschichtung aufweist, welche einen gewichtsmäßigen Anteil von mehr als 35 Gewichtsprozent Zinkoxid (ZnO) sowie 0,1 - 20 Gewichtsprozent Zinnoxid (SnO₂) enthält, gekennzeichnet durch die Schritte:
- Bereitstellen eines keramischen Grundkörpers,
- Ausbilden einer antibakteriellen Oberflächenbeschichtung auf dem keramischen Grundkörper, welche einen gewichtsmäßigen Anteil von mehr als 35 Gewichtsprozent Zinkoxid und 0,1 - 20 Gewichtsprozent Zinnoxid enthält, und/oder einer antibakteriellen Oberfläche des keramischen Grundkörpers, welche einen gewichtsmäßigen Anteil von mehr als 35 Gewichtsprozent Zinkoxid und 0,1 - 20 Gewichtsprozent Zinnoxid enthält, zur Herstellung des keramischen Gegenstands, wobei ein vorgebrannter keramischer Grundkörper verwendet wird und das Ausbilden der antibakteriellen Oberfläche und/oder der antibakteriellen Oberflächenbeschichtung auf dem vorgebrannten keramischen Grundkörper durch einen Brand mit einer Brandtemperatur in einem Temperaturbereich zwischen 650°C und 1350°Cdurchgeführt wird.

In diesem Fall kann eine entsprechende antibakterielle Oberflächenbeschichtung mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf den vorgebrannten keramischen Grundkörper aufgebracht werden. Gegebenenfalls kann die antibakterielle Oberflächenbeschichtung auch hier mit einer Schichtdicke (deutlich) oberhalb 3 mm aufgebracht werden, so dass sich die vorgenannten Schichtdickenbereiche erst nach einem (zweiten) Brand ergeben.

Zum Ausbilden der antibakteriellen Oberflächenbeschichtung kann hier ein Brand mit einer Brandtemperatur in einem Temperaturbereich zwischen 650°C und 1350°C, insbesondere zwischen 700°C und 1280°C, durchgeführt werden. Mithin sind hier im Vergleich gegebenenfalls niedrigere Brandtemperaturen, insbesondere unterhalb 1100°C, möglich. Selbstverständlich kann auch hier über die Brandtemperatur, Branddauer, etc. Einfluss auf die konkrete Zusammensetzung der antibakteriellen Oberflächenbeschichtung genommen werden.

Die antibakterielle Oberfläche und/oder die antibakterielle Oberflächenbeschichtung kann durch zusätzliche Zugabe von Silber, insbesondere mit einem gewichtsmäßigen Anteil von 0,005 - 5 Gewichtsprozent, Silber ausgebildet werden. Das Silber wird typischerweise in metallischer Form zugegeben. Gleichwohl ist auch die Zugabe einer Silberverbindung, z. B. Silbercarbonat, denkbar.

Die antibakterielle Oberfläche und/oder die antibakterielle Oberflächenbeschichtung kann ferner durch zusätzliche Zugabe von Zinnoxid, insbesondere mit einem gewichtsmäßigen Anteil von 0,1 - 20 Gewichtsprozent Zinnoxid, ausgebildet werden.

Alternativ oder ergänzend kann die antibakterielle Oberfläche und/oder die antibakterielle Oberflächenbeschichtung durch zusätzliche Zugabe von Ceroxid und/oder Titanoxid, insbesondere mit einem gewichtsmäßigen Anteil von 0,05 - 1 Gewichtsprozent Ceroxid und/oder mit einem gewichtsmäßigen Anteil von 0,05 - 1 Gewichtsprozent Titanoxid, ausgebildet werden.

Wie im Zusammenhang mit dem keramischen Gegenstand mehrfach erwähnt, kann, nicht erfindungsgemäß, eine entsprechende antibakterielle Oberfläche und/oder eine entsprechende antibakterielle Oberflächenbeschichtung auch vollständig, d. h. zu 100 %, und somit aus reinem Zinkoxid ausgebildet werden.

Im Rahmen des Verfahrens kann partikelförmiges Zinkoxid, wobei zumindest 3 % des Gesamtanteils an verwendetem Zinkoxid eine Partikelgröße oberhalb 45 µm aufweist, verwendet werden.

Sofern eine antibakterielle Oberflächenbeschichtung aufzubringen ist, kann die Aufbringung in allen Fällen beispielsweise vermittels einer Druck-, insbesondere Siebdruck-, Gieß-, Spritz-, Sprüh-, Streich- oder Tauchbeschichtung oder einer Kombination wenigstens zweier der genannten Beschichtungsverfahren durchgeführt werden. Insbesondere für den, wie beschrieben, denkbaren Fall einer antibakteriellen Oberflächenbeschichtung, welche vollständig, d. h. zu 100 %, und somit aus reinem Zinkoxid besteht, kann ein Aufsprühen aus fertigungstechnischen und somit wirtschaftlichen Aspekten zweckmäßig sein.

Weitere Merkmale, Vorteile und Einzelheiten der Erfindung ergeben sich aus den im Folgenden beschriebenen Ausführungsbeispielen sowie anhand der Zeichnungen. Dabei zeigt:
- Fig. 1, 2: je eine Prinzipdarstellung eines Teilausschnitts eines keramischen Gegenstands gemäß einem Ausführungsbeispiel der Erfindung; und
- Fig. 3: ein Diagramm zur Veranschaulichung der antibakteriellen Wirkung antibakterieller Oberflächenbeschichtungen eines keramischen Gegenstands gemäß einem Ausführungsbeispiel der Erfindung.

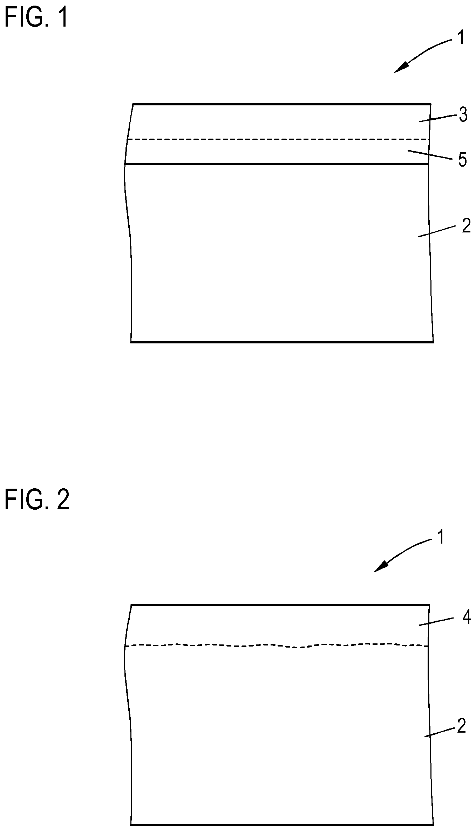

Die Fig. 1, 2 zeigen je eine Prinzipdarstellung eines Teilausschnitts eines keramischen Gegenstands 1 gemäß einem Ausführungsbeispiel der Erfindung in einer geschnittenen Ansicht.

Der keramische Gegenstand 1 umfasst einen keramischen Grundkörper 2. Bei dem in den Fig. gezeigten Ausführungsbeispielen gezeigten keramischen Gegenstand 1 kann es sich z. B. um einen keramischen Sanitär-, Küchen- oder Laborgegenstand, d. h. z. B. um eine Toilettenschüssel, ein Waschbecken bzw. einen Waschtisch, ein Spülbecken bzw. einen Spültisch oder ein Laborbecken bzw. einen Labortisch, handeln.

Der in dem Ausführungsbeispiel gemäß Fig. 1 gezeigte keramische Grundkörper 2 weist eine antibakterielle Oberflächenbeschichtung 3 auf bzw. ist mit einer solchen versehen, der in dem Ausführungsbeispiel gemäß Fig. 2 gezeigte keramische Grundkörper 2 weist eine antibakterielle Oberfläche 4 auf bzw. ist mit einer solchen versehen.

Unter einer antibakteriellen Oberflächenbeschichtung (vgl. Fig. 1) ist eine zumindest abschnittsweise Beschichtung des keramischen Grundkörpers 2 mit einer antibakteriell wirkenden Oberflächenbeschichtung 3 zu verstehen. Das den keramischen Grundkörper 2 bildende keramische Material ist hier also im Bereich der Oberfläche zumindest abschnittsweise mit einer antibakteriell wirkenden Oberflächenbeschichtung 3 beschichtet bzw. ist eine solche antibakteriell wirkende Oberflächenbeschichtung 3 im Bereich der Oberfläche zumindest abschnittsweise auf den keramischen Grundkörper 2 aufgebracht. Der keramische Grundkörper 2 ist hier also nicht zwingend aus einem antibakteriellen Material gebildet oder umfasst wenigstens ein antibakterielles Material. Die antibakteriellen Eigenschaften der antibakteriellen Oberflächenbeschichtung 3 ergeben sich daraus, dass diese aus einem antibakteriellen Material gebildet ist oder wenigstens ein antibakterielles Material umfasst.

Unter einer antibakteriellen Oberfläche 4 (vgl. Fig. 2) ist eine abschnittsweise, d. h. im Bereich der Oberfläche, antibakteriell wirkende Ausbildung des keramischen Grundkörpers 2 zu verstehen. Das den keramischen Grundkörper 2 bildende keramische Material weist hier also zumindest im Bereich der Oberfläche zumindest abschnittsweise antibakterielle Eigenschaften auf. Die antibakteriellen Eigenschaften des keramischen Grundkörpers 2 ergeben sich daraus, dass dieser aus einem antibakteriellen Material gebildet ist oder wenigstens ein antibakterielles Material umfasst.

Sowohl für die in Fig. 1 gezeigte antibakterielle Oberflächenbeschichtung 3 als auch für die in Fig. 2 gezeigte antibakterielle Oberfläche 4 gilt, dass diese einen gewichtsmäßigen Anteil von mehr als 35 Gewichtsprozent Zinkoxid (ZnO), d. h. insbesondere wenigstens 36 Gewichtsprozent Zinkoxid, als antibakteriellen Bestandteil enthält. Sofern die antibakterielle Oberflächenbeschichtung 3 bzw. die antibakterielle Oberfläche 4 weitere Bestandteile aufweist, beträgt der gewichtsmäßige Anteil von Zinkoxid in der Gesamtzusammensetzung sonach mehr als 35 Gewichtsprozent Zinkoxid, insbesondere wenigstens 36 Gewichtsprozent Zinkoxid. Insgesamt addieren sich sämtliche Bestandteile der antibakteriellen Oberflächenbeschichtung 3 bzw. der antibakteriellen Oberfläche 4 auf eine Gesamtzusammensetzung von 100 Gewichtsprozent. Ausnahme ist der Fall einer antibakteriellen Oberflächenbeschichtung 3 bzw. einer antibakteriellen Oberfläche 4, welche vollständig, d. h. zu 100 %, und somit aus reinem Zinkoxid besteht.

Wie die weiter unten beschriebenen Untersuchungen zeigen, stellen gewichtsmäßige Anteile von mehr als 35 Gewichtsprozent Zinkoxid eine hervorragende antibakterielle Wirkung sicher. Diese ist mit gewichtsmäßigen Anteilen von bis zu 35 Gewichtsprozent Zinkoxid nicht erreichbar.

Der gewichtsmäßige Anteil von mehr als 35 Gewichtsprozent Zinkoxid lässt sich ebenso in der Seger-Formel, welche bei keramischen Beschichtungen bzw. Glasuren bekanntermaßen das molare Verhältnis der in der Beschichtung bzw. Glaser enthaltenen Oxide ausdrückt, darstellen. Übertragen auf die Seger-Formel bedeutet der gewichtsmäßige Anteil von mehr als 35 Gewichtsprozent Zinkoxid einen Anteil an Zinkoxid von mehr als 0,9.

Eine beispielhafte Darstellung einer möglichen Seger-Formel ist weiter oben für Brandtemperaturen in einem Temperaturbereich zwischen 1150°C und 1300°C dargestellt.

Die antibakterielle Oberflächenbeschichtung 3 kann direkt auf dem keramischen Grundkörper 2 ausgebildet bzw. direkt auf den keramischen Grundkörper 2 aufgebracht sein. Wie in Fig. 1 durch den durch die Strichlierung schematisch abgetrennten Bereich angedeutet, kann die antibakterielle Oberflächenbeschichtung 3 auch auf eine (zuvor) auf dem keramischen Grundkörper 2 ausgebildete bzw. eine (zuvor) auf den keramischen Grundkörper 2 aufgebrachte Grundbeschichtung 5 ausgebildet bzw. aufgebracht sein. Bei der Grundbeschichtung 5 kann es sich um eine im Hinblick auf den jeweiligen Anwendungs- bzw. Verwendungsbereich des keramischen Gegenstands 1 ausgewählte Standardglasur handeln. Für den beispielhaften Fall eines keramischen Sanitärgegenstands kann es sich bei der Grundbeschichtung 5 sonach z. B. um eine Sanitärstandardglasur, z. B. basierend auf Aluminiumoxid (Al₂O₃) oder Siliziumoxid (SiO₂), handeln.

Die Schichtdicke der antibakteriellen Oberflächenbeschichtung 3 kann, insbesondere nach einem Brand, in einem Schichtdickenbereich zwischen 0,1 mm und 3 mm, insbesondere zwischen 0,25 mm und 1,5 mm, bevorzugt zwischen 0,5 mm und 1 mm, liegen. Die antibakterielle Oberflächenbeschichtung 3 muss nicht überall eine gleiche Schichtdicke aufweisen, d. h. die Schichtdicke der antibakteriellen Oberflächenbeschichtung 3 kann ungeachtet von fertigungsbedingten Abweichungen bereichsweise variieren.

Für den Fall, dass die antibakterielle Oberflächenbeschichtung 3 aus reinem Zinkoxid besteht, liegt die Schichtdicke der antibakteriellen Oberflächenbeschichtung 3 typischerweise in einem Schichtdickenbereich zwischen 0,1 mm und 3 mm, insbesondere zwischen 0,25 mm und 1,5 mm, bevorzugt zwischen 0,5 mm und 1 mm.

Die antibakterielle Oberflächenbeschichtung 3 kann zusätzlich Silber, insbesondere mit einem gewichtsmäßigen Anteil von 0,005 - 5 Gewichtsprozent, enthalten. Gleiches gilt für die antibakterielle Oberfläche 4. Durch die Zugabe von Silber kann die antibakterielle Wirkung gezielt beeinflusst werden. Das Silber kann in metallischer Form zugegeben sein. Gleichwohl ist auch die Zugabe einer Silberverbindung, wie z. B. Silbercarbonat (Ag₂CO₃), denkbar.

Die antibakterielle Oberflächenbeschichtung 3 kann alternativ oder ergänzend zu dem Silberanteil zusätzlich Zinnoxid (SnO), insbesondere mit einem gewichtsmäßigen Anteil von 0,1 - 20 Gewichtsprozent, enthalten. Gleiches gilt wiederum für die antibakterielle Oberfläche 4. Zinnoxid kann als Keimbildner wirken und somit der Ausbildung einer stabilen antibakteriellen Oberflächenbeschichtung 3 zuträglich sein. Ferner kann durch die Zugabe von Zinnoxid die Oberflächenbeschaffenheit der antibakteriellen Oberflächenbeschichtung 3 bzw. der antibakteriellen Oberfläche 4 beeinflusst werden.

Die antibakterielle Oberflächenbeschichtung 3 kann alternativ oder ergänzend zu dem Silberanteil und dem Zinnoxidanteil zusätzlich Ceroxid (CeO₂), insbesondere mit einem gewichtsmäßigen Anteil von 0,05 - 1 Gewichtsprozent, enthalten. Gleiches gilt wiederum für die antibakterielle Oberfläche 4. Ähnlich wie Zinnoxid kann auch Ceroxid als Keimbildner wirken und somit der Ausbildung einer stabilen antibakteriellen Oberflächenbeschichtung 3 zuträglich sein. Ferner kann auch durch die Zugabe von Ceroxid die Oberflächenbeschaffenheit der antibakteriellen Oberflächenbeschichtung 3 bzw. der antibakteriellen Oberfläche 4 beeinflusst werden.

Ferner kann die antibakterielle Oberflächenbeschichtung 3 alternativ oder ergänzend zu dem Silberanteil, dem Zinnoxidanteil und dem Ceroxidanteil zusätzlich Titanoxid (TiO₂), insbesondere mit einem gewichtsmäßigen Anteil von 0,05 - 1 Gewichtsprozent, enthalten. Gleiches gilt wiederum für die antibakterielle Oberfläche 4. Ähnlich wie Zinnoxid und Ceroxid kann auch Titanoxid als Keimbildner wirken und somit der Ausbildung einer stabilen antibakteriellen Oberflächenbeschichtung 3 zuträglich sein. Ferner kann auch durch die Zugabe von Titanoxid die Oberflächenbeschaffenheit der antibakteriellen Oberflächenbeschichtung 3 bzw. der antibakteriellen Oberfläche 4 beeinflusst werden.

Das in der antibakteriellen Oberflächenbeschichtung 3 bzw. der antibakteriellen Oberfläche 4 enthaltene Zinkoxid liegt typischerweise partikelförmig vor. Über die Partikeleigenschaften, d. h. insbesondere Form, Größe und Verteilung bzw. den Mahlgrad der Partikel, lässt sich die Reaktivität sowie die Schmelzfähigkeit dieser und somit der antibakteriellen Oberflächenbeschichtung 3 insgesamt beeinflussen. In diesem Zusammenhang sind vergleichsweise hohe Mahlgrade, d. h. vergleichsweise feine Mahlungen, zweckmäßig. Entsprechend kann beispielsweise zumindest 3 % des Gesamtanteils an Zinkoxid eine Partikelgröße oberhalb 45 µm aufweisen.

Ein Verfahren zur Herstellung eines wie in den Ausführungsbeispielen gemäß den Fig. 1, 2 gezeigten keramischen Gegenstands 1 ist durch die folgenden wesentlichen Schritte gekennzeichnet:
- Bereitstellen eines keramischen Grundkörpers 2,
- Ausbilden einer antibakteriellen Oberflächenbeschichtung 3 auf dem keramischen Grundkörper 2, welche einen gewichtsmäßigen Anteil von mehr als 35 Gewichtsprozent Zinkoxid enthält, und/oder einer antibakteriellen Oberfläche 4 des keramischen Grundkörpers 2, welche einen gewichtsmäßigen Anteil von mehr als 35 Gewichtsprozent Zinkoxid enthält, zur Herstellung des keramischen Gegenstands 1.

Im Rahmen des Verfahrens kann ein ungebrannter keramischer Grundkörper 2 (keramischer Scherben) verwendet werden. Insbesondere kann ein ungebrannter keramischer Grundkörper 2 verwendet werden, auf welchem (zuvor) zumindest abschnittsweise eine Grundbeschichtung 5 aufgebracht ist bzw. wird. Die vorherige zumindest abschnittsweise Aufbringung der Grundbeschichtung 5 kann ebenso im Rahmen des Verfahrens erfolgen. Beispielsweise kann ein ungebrannter keramischer Grundkörper 2 verwendet werden, auf welchem eine Grundbeschichtung 5 mit einer Schichtdicke in einem Schichtdickenbereich zwischen 0,5 mm und 3 mm, insbesondere 1 mm und 2 mm, aufgebracht ist bzw. wird.

Die antibakterielle Oberflächenbeschichtung 3 kann im Weiteren mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf die Grundbeschichtung 5 aufgebracht werden. Gegebenenfalls kann die antibakterielle Oberflächenbeschichtung 3 auch mit einer Schichtdicke (deutlich) oberhalb 3 mm auf die Grundbeschichtung 5 aufgebracht werden, so dass sich die vorgenannten Schichtdickenbereiche erst nach einem Brand ergeben.

Zum Ausbilden der antibakteriellen Oberflächenbeschichtung 3 bzw. der antibakteriellen Oberfläche 4 kann ein Brand mit einer Brandtemperatur in einem Temperaturbereich zwischen 1100°C und 1350°C, insbesondere zwischen 1130°C und 1280°C, durchgeführt werden. Über die Brandtemperatur, Branddauer, etc. kann Einfluss auf die konkrete Zusammensetzung der antibakteriellen Oberflächenbeschichtung 3 bzw. der antibakteriellen Oberfläche 4 genommen werden. In dem genannten Temperaturbereich ist ein hinreichendes Aufschmelzen eines Beschichtungsmaterials möglich, ohne das dieses, die Aufbringung der antibakteriellen Oberflächenbeschichtung 3 erschwerend, zu stark verflüssigt.

Alternativ zu dem Ausbilden der antibakteriellen Oberflächenbeschichtung 3 bzw. der antibakteriellen Oberfläche 4 auf einem nicht gebrannten keramischen Grundkörper 2 kann das Ausbilden einer antibakteriellen Oberflächenbeschichtung 3 bzw. einer antibakteriellen Oberfläche 4 mit einem vorgebrannten keramischen Grundkörper 2 (keramischer Scherben) durchgeführt werden. In diesem Fall kann die antibakterielle Oberflächenbeschichtung 3 mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf den vorgebrannten keramischen Grundkörper 2 aufgebracht werden. Gegebenenfalls kann die antibakterielle Oberflächenbeschichtung 3 auch hier mit einer Schichtdicke (deutlich) oberhalb 3 mm aufgebracht werden, so dass sich die vorgenannten Schichtdickenbereiche erst nach einem (zweiten) Brand ergeben.

Zum Ausbilden der antibakteriellen Oberflächenbeschichtung 3 kann hier ein Brand mit einer Brandtemperatur in einem Temperaturbereich zwischen 650°C und 1350°C, insbesondere zwischen 700°C und 1280°C, durchgeführt werden. Mithin sind hier im Vergleich gegebenenfalls niedrigere Brandtemperaturen, insbesondere unterhalb 1100°C, möglich. Selbstverständlich kann auch hier über die Brandtemperatur, Branddauer, etc. Einfluss auf die konkrete Zusammensetzung der antibakteriellen Oberflächenbeschichtung 3 genommen werden.

Im Rahmen des Verfahrens kann eine antibakterielle Oberflächenbeschichtung 3 bzw. eine antibakterielle Oberfläche 4 ferner durch zusätzliche Zugabe von Silber und/oder Zinnoxid und/oder Ceroxid und/oder Titanoxid ausgebildet werden. Jeweilige Gewichtsanteile jeweiliger zusätzlicher Bestandteile sind weiter oben genannt.

In allen Fällen kann eine antibakterielle Oberflächenbeschichtung 3 beispielsweise vermittels einer Druck-, insbesondere Siebdruck-, Gieß-, Spritz-, Sprüh-, Streich- oder Tauchbeschichtung oder einer Kombination wenigstens zweier der genannten Beschichtungsverfahren aufgebracht werden.

Die besondere antibakterielle Wirkung entsprechender antibakterieller Oberflächenbeschichtungen 3, analoges gilt für entsprechende antibakterielle Oberflächen 4 wurde in Untersuchungen bestätigt. Ergebnisse dieser Untersuchungen werden im Folgenden näher dargestellt.

In einer Untersuchungsreihe wurden mit einer entsprechenden antibakteriellen Oberflächenbeschichtung 3 versehene keramische Gegenstände, hier keramische Fliesen (Testflächen), auf ihre antibakteriellen Eigenschaften gegenüber Escherichia coli (NCTC 10538) als Testkeim bzw. -organismus untersucht. Die Untersuchungen wurden in Anlehnung an den japanischen Industriestandard "JIS Z 2801:2010 - Antimicrobial products - Test for antimicrobial activity and efficacy" und die Norm "BS ISO 22196:2007 - Plastics - Measurement of antibacterial activity on plastics surfaces" durchgeführt.

Ergebnisse der Untersuchungen dieser Untersuchungsreihe sind in nachfolgender Tabelle im Vergleich zu einer mitgeführten Kontrolle dargestellt. Pro Durchgang wurden vier Fliesen untersucht. Als Kontrollflächen dienten Glasflächen ohne antibakterielle Oberflächenbeschichtung 3. Das Vorliegen eines antibakteriellen Effekts wurde bei einer Temperatur von 37°C und einer Einwirkzeit von 24 Stunden untersucht.

| | Testfläche 24 h Mittelwert [log₁₀-Stufen] | Kontrolle 24h Mittelwert [log₁₀-Stufen] | RF Kontrolle Testfläche | Kontrolle unbeschichtet (=Ausgangsbelastung) [log₁₀-Stufen] |
|---|---|---|---|---|
| Durchgang 1 | 2,29 | -0,97 | 3,26 | 2,47 x 10⁵ |
| Durchgang 2 | 2,08 | -0,94 | 3,02 | 2,47 x 10⁵ |

Wie der Tabelle zu entnehmen ist, konnte in beiden Durchgängen eine Reduktion der Escherichia coli Testorganismen während der Inkubation bei den antibakteriell beschichteten Testflächen von 2,29 und 2,08 log₁₀-Stufen festgestellt werden. Unter Berücksichtigung des Wachstums der Testorganismen auf den Kontrollflächen ohne antibakterielle Oberflächenbeschichtung 3 (0,97 und 0,94 log₁₀-Stufen) erfolgte somit bei den antibakteriell beschichteten Testflächen in Durchgang 1 eine effektive Reduktion der Testorganismen von 3,26 log₁₀-Stufen und in Durchgang 2 eine effektive Reduktion der Testorganismen von 3,02 log₁₀-Stufen. Der antibakteriellen Oberflächenbeschichtung 3 kann sonach eine sichere antibakterielle Wirksamkeit bescheinigt werden. Zu beachten ist hierbei, dass für die Bezeichnung "antibakterieller Effekt" seitens der JIS Z 2801:2010 eine Reduktion der Testorganismen von mindestens zwei log₁₀-Stufen gefordert wird.

In einer weiteren Untersuchungsreihe wurden mit entsprechenden antibakteriellen Oberflächenbeschichtungen 3 unterschiedlicher Zusammensetzung versehene keramische Gegenstände, hier wiederum keramische Fliesen, auf ihre antibakteriellen Eigenschaften gegenüber Escherichia coli (NCTC 10538) als Testkeim bzw. -organismus untersucht. Die Untersuchungen wurden ebenso in Anlehnung an den japanischen Industriestandard "JIS Z 2801:2010 - Antimicrobial products - Test for antimicrobial activity and efficacy" durchgeführt.

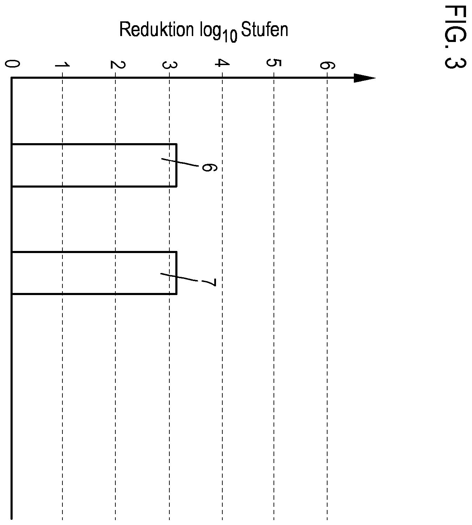

Die Ergebnisse der Untersuchungsreihe sind in dem in Fig. 3 gezeigten Diagramm dargestellt.

Balken 6 repräsentiert eine antibakterielle Oberflächenbeschichtung 3 mit einer Zusammensetzung von Dolomit ca. 2,60 Gewichtsprozent, Kalziumcarbonat ca. 10,19, Schamotte ca. 12,15 Gewichtsprozent, Fritte ca. 3,99 Gewichtsprozent, Kaolin ca. 5,21 Gewichtsprozent, Quarzmehl ca. 28,63 Gewichtsprozent, Zirkonsilikat ca. 9,11 Gewichtsprozent, Feldspat ca. 10,54 Gewichtsprozent, Zinnoxid ca. 0,87 Gewichtsprozent, Zinkoxid ca. 35,50 Gewichtsprozent. Die antibakterielle Oberflächenbeschichtung 3 enthält zu Untersuchungszwecken ferner einen Anteil an Wasser, Leim und einem Verflüssigungsmittel. Der Brand erfolgte bei einer Temperatur von 1282°C.

Balken 7 repräsentiert eine antibakterielle Oberflächenbeschichtung 3 mit einer Zusammensetzung von Dolomit ca. 2,60 Gewichtsprozent, Kalziumcarbonat ca. 9,11 Gewichtsprozent, Schamotte ca. 12,15 Gewichtsprozent, Fritte ca. 3,99 Gewichtsprozent, Kaolin ca. 5,21 Gewichtsprozent, Quarzmehl ca. 30,80 Gewichtsprozent, Zirkonsilikat ca. 9,11 Gewichtsprozent, Feldspat ca. 9,46 Gewichtsprozent, Zinnoxid ca. 0,87 Gewichtsprozent, Zinkoxid ca. 35,50 Gewichtsprozent. Die antibakterielle Oberflächenbeschichtung 3 enthält zu Untersuchungszwecken ferner einen Anteil an Wasser, Leim und einem Verflüssigungsmittel. Der Brand erfolgte bei einer Temperatur von 1280°C.

Aus den in Fig. 3 dargestellten Ergebnissen lässt sich ableiten, dass sich eine antibakterielle Wirkung jedenfalls von drei log₁₀Stufen nachweisen lässt.

## Patentansprüche

1. Keramischer Gegenstand (1)in Form eines Sanitär-, Küchen- oder Laborgegenstands, **dadurch gekennzeichnet, dass** er einen keramischen Grundkörper (2) aufweist, welcher zumindest abschnittsweise eine antibakterielle Oberfläche (4) und/oder eine antibakterielle Oberflächenbeschichtung (3) aufweist, welche einen gewichtsmäßigen Anteil von mehr als 35 Gewichtsprozent Zinkoxid (ZnO) enthält, und dass die antibakterielle Oberfläche (3) und/oder die antibakterielle Oberflächenbeschichtung (4) zusätzlich einen gewichtsmäßigen Anteil von 0,1 - 20 Gewichtsprozent Zinnoxid (SnO₂) enthält, wobei die Oberfläche (4) und/oder die Oberflächenbeschichtung (3) durch einen Brand eines ungebrannten keramischen Grundkörpers mit einer Brandtemperatur in einem Bereich zwischen 1100°C und 1350°C oder durch einen Brand eines vorgebrannten keramischen Grundkörpers mit einer Brandtemperatur in einem Bereich zwischen 650°C und 1350°C erzeugt ist.

2. Keramischer Gegenstand nach Anspruch 1, **dadurch gekennzeichnet, dass** die antibakterielle Oberflächenbeschichtung (3) direkt auf den keramischen Grundkörper (2) oder auf eine zumindest abschnittsweise auf den keramischen Grundkörper (2) aufgebrachte Grundbeschichtung (5) aufgebracht ist.

3. Keramischer Gegenstand nach Anspruch 1 oder 2, **dadurch gekennzeichnet, dass** die Schichtdicke der antibakteriellen Oberflächenbeschichtung (3) in einem Schichtdickenbereich zwischen 0,1 mm und 3 mm, insbesondere zwischen 0,25 mm und 1,5 mm, bevorzugt zwischen 0,5 mm und 1 mm, liegt.

4. Keramischer Gegenstand nach einem der vorangehenden Ansprüche, **dadurch gekennzeichnet, dass** die antibakterielle Oberfläche (4) und/oder die antibakterielle Oberflächenbeschichtung (3) zusätzlich einen gewichtsmäßigen Anteil von 0,005 - 5 Gewichtsprozent Silber enthält.

5. Keramischer Gegenstand nach einem der vorangehenden Ansprüche, **dadurch gekennzeichnet, dass** die antibakterielle Oberfläche (4) und/oder die antibakterielle Oberflächenbeschichtung (3) zusätzlich einen gewichtsmäßigen Anteil von 0,05 - 1 Gewichtsprozent Ceroxid (CeO₂) enthält.

6. Keramischer Gegenstand nach einem der vorangehenden Ansprüche, **dadurch gekennzeichnet, dass** die antibakterielle Oberfläche (4) und/oder die antibakterielle Oberflächenbeschichtung (3) zusätzlich einen gewichtsmäßigen Anteil von 0,05 - 1 Gewichtsprozent Titanoxid (TiO₂) enthält.

7. Keramischer Gegenstand nach einem der vorangehenden Ansprüche, **dadurch gekennzeichnet, dass** das Zinkoxid partikelförmig vorliegt, wobei zumindest 3% des Gesamtanteils an Zinkoxid eine Partikelgröße oberhalb 45 µm aufweist.

8. Verfahren zur Herstellung eines keramischen Gegenstands (1) in Form eines Sanitär-, Küchen- oder Laborgegenstands, welcher einen keramischen Grundkörper (2) aufweist, welcher zumindest abschnittsweise eine antibakterielle Oberfläche (4) und/oder eine antibakterielle Oberflächenbeschichtung (3) aufweist, welche einen gewichtsmäßigen Anteil von mehr als 35 Gewichtsprozent Zinkoxid (ZnO) sowie 0,1 - 20 Gewichtsprozent Zinnoxid (SnO₂) enthält, **gekennzeichnet durch** die Schritte:
- Bereitstellen eines keramischen Grundkörpers (2),
- Ausbilden einer antibakteriellen Oberflächenbeschichtung (3) auf dem keramischen Grundkörper (2), welche einen gewichtsmäßigen Anteil von mehr als 35 Gewichtsprozent Zinkoxid und 0,1 - 20 Gewichtsprozent Zinnoxid enthält, und/oder einer antibakteriellen Oberfläche (4) des keramischen Grundkörpers (2), welche einen gewichtsmäßigen Anteil von mehr als 35 Gewichtsprozent Zinkoxid und 0,1 - 20 Gewichtsprozent Zinnoxid enthält, zur Herstellung des keramischen Gegenstands (1), wobei ein ungebrannter keramischer Grundkörper (2) verwendet wird und das Ausbilden der antibakteriellen Oberfläche (4) und/oder der antibakteriellen Oberflächenbeschichtung (3) auf dem ungebrannten keramischen Grundkörper (2) durch einen Brand mit einer Brandtemperatur in einem Temperaturbereich zwischen 1100°C und 1350°C durchgeführt wird.

9. Verfahren nach Anspruch 8, **dadurch gekennzeichnet, dass** ein ungebrannter keramischer Grundkörper (2) verwendet wird, auf welchem zumindest abschnittsweise eine Grundbeschichtung (5) aufgebracht wird, und die antibakterielle Oberflächenbeschichtung (3) auf die Grundbeschichtung (5) aufgebracht wird.

10. Verfahren nach Anspruch 9, **dadurch gekennzeichnet, dass** ein ungebrannter keramischer Grundkörper (2) verwendet wird, auf welchem zumindest abschnittsweise eine Grundbeschichtung (5) mit einer Schichtdicke in einem Schichtdickenbereich zwischen 0,5 mm und 3 mm, insbesondere 1 mm und 2 mm, aufgebracht wird.

11. Verfahren nach Anspruch 9 oder 10, **dadurch gekennzeichnet, dass** die antibakterielle Oberflächenbeschichtung (3) mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf die Grundbeschichtung (5) aufgebracht wird.

12. Verfahren nach einem der Ansprüche 8 bis 11, **dadurch gekennzeichnet, dass** der Temperaturbereich zwischen 1130°C und 1280°C liegt.

13. Verfahren zur Herstellung eines keramischen Gegenstands (1) in Form eines Sanitär-, Küchen- oder Laborgegenstands, welcher einen keramischen Grundkörper (2) aufweist, welcher zumindest abschnittsweise eine antibakterielle Oberfläche (4) und/oder eine antibakterielle Oberflächenbeschichtung (3) aufweist, welche einen gewichtsmäßigen Anteil von mehr als 35 Gewichtsprozent Zinkoxid (ZnO) sowie 0,1 - 20 Gewichtsprozent Zinnoxid (SnO2) enthält, **gekennzeichnet durch** die Schritte:
- Bereitstellen eines keramischen Grundkörpers (2),
- Ausbilden einer antibakteriellen Oberflächenbeschichtung (3) auf dem keramischen Grundkörper (2), welche einen gewichtsmäßigen Anteil von mehr als 35 Gewichtsprozent Zinkoxid und 0,1 - 20 Gewichtsprozent Zinnoxid enthält, und/oder einer antibakteriellen Oberfläche (4) des keramischen Grundkörpers (2), welche einen gewichtsmäßigen Anteil von mehr als 35 Gewichtsprozent Zinkoxid und 0,1 - 20 Gewichtsprozent Zinnoxid enthält, zur Herstellung des keramischen Gegenstands (1), wobei ein vorgebrannter keramischer Grundkörper (2) verwendet wird und das Ausbilden der antibakteriellen Oberfläche (4) und/oder der antibakteriellen Oberflächenbeschichtung (3) auf dem vorgebrannten keramischen Grundkörper (2) durch einen Brand mit einer Brandtemperatur in einem Temperaturbereich zwischen 650°C und 1350°C durchgeführt wird.

14. Verfahren nach Anspruch 13, **dadurch gekennzeichnet, dass** die antibakterielle Oberflächenbeschichtung (3) mit einer Schichtdicke in einem Schichtdickenbereich zwischen 0,1 mm und 3 mm, insbesondere zwischen 0,25 mm und 1,5 mm, bevorzugt zwischen 0,5 mm und 1 mm, auf den vorgebrannten keramischen Grundkörper (2) aufgebracht wird.

15. Verfahren nach Anspruch 13 oder 14, **dadurch gekennzeichnet, dass** der Temperaturbereich zwischen 700°C und 1280°C liegt.

16. Verfahren nach einem der Ansprüche 8 bis 15, **dadurch gekennzeichnet, dass** ein Aufbringen der antibakteriellen Oberflächenbeschichtung (3) vermittels einer Druck-, insbesondere Siebdruck-, Gieß-, Spritz-, Sprüh-, Streich- oder Tauchbeschichtung oder einer Kombination wenigstens zweier der genannten Beschichtungsverfahren durchgeführt wird.

17. Verfahren nach einem der Ansprüche 8 bis 16, **dadurch gekennzeichnet, dass** die antibakterielle Oberfläche (4) und/oder die antibakterielle Oberflächenbeschichtung (3) zusätzlich durch Zugabe von Silber mit einem gewichtsmäßigen Anteil von 0,005 - 5 Gewichtsprozent Silber ausgebildet wird.

18. Verfahren nach einem der Ansprüche 8 bis 17, **dadurch gekennzeichnet, dass** die antibakterielle Oberfläche (4) und/oder die antibakterielle Oberflächenbeschichtung (3) zusätzlich durch Zugabe von Ceroxid (CeO₂) mit einem gewichtsmäßigen Anteil von 0,05 - 1 Gewichtsprozent Ceroxid (CeO₂) ausgebildet wird.

19. Verfahren nach einem der Ansprüche 8 bis 18, **dadurch gekennzeichnet, dass** die antibakterielle Oberfläche (4) und/oder die antibakterielle Oberflächenbeschichtung (3) zusätzlich durch Zugabe von Titanoxid (TiO₂) mit einem gewichtsmäßigen Anteil von 0,05 - 1 Gewichtsprozent Titanoxid (TiO₂) ausgebildet wird.

20. Verfahren nach einem der Ansprüche 8 bis 19, **dadurch gekennzeichnet, dass** partikelförmiges Zinkoxid, wobei zumindest 3% des Gesamtanteils an verwendetem Zinkoxid eine Partikelgröße oberhalb 45 µm aufweist, verwendet wird.

## Claims

1. Ceramic article (1) in the form of a sanitation, kitchen or laboratory article, **characterized in that** it comprises a ceramic main body (2) which at least in sections has an antibacterial surface (4) and/or an antibacterial surface coating (3) containing a weight fraction of more than 35 weight percent of zinc oxide (ZnO) and **in that** the antibacterial surface (3) and/or the antibacterial surface coating (4) additionally contain a weight fraction of 0.1-20 weight percent of tin oxide (SnO₂), wherein the surface (4) and/or the surface coating (3) are generated by a firing of an unfired ceramic main body at a firing temperature in a range between 1100°C and 1350°C or by a firing of a pre-fired ceramic main body at a firing temperature in a range between 650°C and 1350°C.

2. Ceramic article according to Claim 1, **characterized in that** the antibacterial surface coating (3) has been applied to the ceramic main body (2) directly or to a primer coating (5) applied at least in sections to the ceramic main body (2).

3. Ceramic article according to Claim 1 or 2, **characterized in that** the layer thickness of the antibacterial surface coating (3) is in a layer thickness range between 0.1 mm and 3 mm, in particular between 0.25 mm and 1.5 mm, preferably between 0.5 mm and 1 mm.

4. Ceramic article according to any of the preceding claims, **characterized in that** the antibacterial surface (4) and/or the antibacterial surface coating (3) additionally contain a weight fraction of 0.005-5 weight percent of silver.

5. Ceramic article according to any of the preceding claims, **characterized in that** the antibacterial surface (4) and/or the antibacterial surface coating (3) additionally contain a weight fraction of 0.05-1 weight percent of cerium oxide (CeO₂).

6. Ceramic article according to any of the preceding claims, **characterized in that** the antibacterial surface (4) and/or the antibacterial surface coating (3) additionally contain a weight fraction of 0.05-1 weight percent of titanium oxide (TiO₂).

7. Ceramic article according to any of the preceding claims, **characterized in that** the zinc oxide is in particulate form, wherein at least 3% of the total proportion of zinc oxide has a particle size above 45 µm.

8. Process for producing a ceramic article (1) in the form of a sanitation, kitchen or laboratory article comprising a ceramic main body (2) which at least in sections has an antibacterial surface (4) and/or an antibacterial surface coating (3) containing a weight fraction of more than 35 weight percent of zinc oxide (ZnO) and 0.1-20 weight percent of tin oxide (SnO₂), **characterized by** the steps of:
- providing a ceramic main body (2),
- forming an antibacterial surface coating (3) on the ceramic main body (2) containing a weight fraction of more than 35 weight percent of zinc oxide and 0.1-20 weight percent of tin oxide and/or an antibacterial surface (4) of the ceramic main body (2) containing a weight fraction of more than 35 weight percent of zinc oxide and 0.1-20 weight percent of tin oxide to produce the ceramic article (1), wherein an unfired ceramic main body (2) is used and the forming of the antibacterial surface (4) and/or of the antibacterial surface coating (3) on the unfired ceramic main body (2) is effected by a firing at a firing temperature in a temperature range between 1100°C and 1350°C.

9. Process according to Claim 8, **characterized in that** it comprises using an unfired ceramic main body (2) to which a primer coating (5) is applied at least in sections and applying the antibacterial surface coating (3) to the primer coating (5).

10. Process according to Claim 9, **characterized in that** it comprises using an unfired ceramic main body (2) to which a primer coating (5) is applied at least in sections with a layer thickness in a layer thickness range between 0.5 mm and 3 mm, in particular 1 mm and 2 mm.

11. Process according to Claim 9 or 10, **characterized in that** the antibacterial surface coating (3) is applied to the primer coating (5) with a layer thickness in a layer thickness range between 0.1 mm and 3 mm, in particular between 0.25 mm and 1.5 mm, preferably between 0.5 mm and 1 mm.

12. Process according to any of Claims 8 to 11, **characterized in that** the temperature range is between 1130°C and 1280°C.

13. Process for producing a ceramic article (1) in the form of a sanitation, kitchen or laboratory article comprising a ceramic main body (2) which at least in sections has an antibacterial surface (4) and/or an antibacterial surface coating (3) containing a weight fraction of more than 35 weight percent of zinc oxide (ZnO) and 0.1-20 weight percent of tin oxide (SnO₂), **characterized by** the steps of:
- providing a ceramic main body (2),
- forming an antibacterial surface coating (3) on the ceramic main body (2) containing a weight fraction of more than 35 weight percent of zinc oxide and 0.1-20 weight percent of tin oxide and/or an antibacterial surface (4) of the ceramic main body (2) containing a weight fraction of more than 35 weight percent of zinc oxide and 0.1-20 weight percent of tin oxide to produce the ceramic article (1), wherein a pre-fired ceramic main body (2) is used and the forming of the antibacterial surface (4) and/or of the antibacterial surface coating (3) on the pre-fired ceramic main body (2) is effected by a firing at a firing temperature in a temperature range between 650°C and 1350°C.

14. Process according to Claim 13, **characterized in that** the antibacterial surface coating (3) is applied to the pre-fired ceramic main body (2) with a layer thickness in a layer thickness range between 0.1 mm and 3 mm, in particular between 0.25 mm and 1.5 mm, preferably between 0.5 mm and 1 mm.

15. Process according to Claim 13 or 14, **characterized in that** the temperature range is between 700°C and 1280°C.

16. Process according to any of Claims 8 to 15, **characterized in that** an application of the antibacterial surface coating (3) is carried out by means of print coating, in particular screenprint coating, curtain coating, spray coating, knife coating, or immersion coating or a combination of at least two of the recited coating processes.

17. Process according to any of Claims 8 to 16, **characterized in that** the antibacterial surface (4) and/or the antibacterial surface coating (3) are in addition formed with a weight fraction of 0.005-5 weight percent of silver by addition of silver.

18. Process according to any of Claims 8 to 17, **characterized in that** the antibacterial surface (4) and/or the antibacterial surface coating (3) are in addition formed with a weight fraction of 0.05-1 weight percent of cerium oxide (CeO₂) by addition of cerium oxide (CeO₂).

19. Process according to any of Claims 8 to 18, **characterized in that** the antibacterial surface (4) and/or the antibacterial surface coating (3) are in addition formed with a weight fraction of 0.05-1 weight percent of titanium oxide (TiO₂) by addition of titanium oxide (TiO₂).

20. Process according to any of Claims 8 to 19, **characterized in that** it employs particulate zinc oxide, wherein at least 3% of the total proportion of employed zinc oxide has a particle size above 45 µm.

## Revendications

1. Objet céramique (1) sous forme d'un objet sanitaire, de cuisine ou de laboratoire, **caractérisé en ce qu'**il présente un corps de base céramique (2), qui présente au moins par sections une surface antibactérienne (4) et/ou un revêtement de surface antibactérien (3), qui contien(nen)t une proportion pondérale supérieure à 35% en poids d'oxyde de zinc (ZnO) et **en ce que** la surface antibactérienne et/ou le revêtement de surface antibactérien (4) contien(nen)t en outre une proportion pondérale de 0,1-20% en poids d'oxyde d'étain (SnO₂), la surface (4) et/ou le revêtement de surface (3) étant produit (e) (s) par une cuisson d'un corps de base céramique non cuit à une température de cuisson dans la plage entre 1100°C et 1350°C ou par une cuisson d'un corps de base céramique précuit à une température de cuisson dans une plage entre 650°C et 1350°C.

2. Objet céramique selon la revendication 1, **caractérisé en ce que** le revêtement de surface antibactérien (3) est appliqué directement sur le corps de base céramique (2) ou sur un revêtement de base (5) appliqué au moins par sections sur le corps de base céramique (2).

3. Objet céramique selon la revendication 1 ou 2, **caractérisé en ce que** l'épaisseur de couche du revêtement de surface antibactérien (3) est située dans une plage d'épaisseurs de couche entre 0,1 mm et 3 mm, en particulier entre 0,25 mm et 1,5 mm, de préférence entre 0,5 mm et 1 mm.

4. Objet céramique selon l'une quelconque des revendications précédentes, **caractérisé en ce que** la surface antibactérienne (4) et/ou le revêtement de surface antibactérien (3) contien(nen)t en outre une proportion pondérale de 0,005-5% en poids d'argent.

5. Objet céramique selon l'une quelconque des revendications précédentes, **caractérisé en ce que** la surface antibactérienne (4) et/ou le revêtement de surface antibactérien (3) contien(nen)t en outre une proportion pondérale de 0,05-1% en poids d'oxyde de cérium (CeO₂).

6. Objet céramique selon l'une quelconque des revendications précédentes, **caractérisé en ce que** la surface antibactérienne (4) et/ou le revêtement de surface antibactérien (3) contien(nen)t en outre une proportion pondérale de 0,05-1% en poids d'oxyde de titane (TiO₂).

7. Objet céramique selon l'une quelconque des revendications précédentes, **caractérisé en ce que** l'oxyde de zinc se trouve sous forme particulaire, au moins 3% de la proportion totale d'oxyde de zinc présentant une grosseur de particule supérieure à 45 µm.

8. Procédé pour la fabrication d'un objet céramique (1) sous forme d'un objet sanitaire, de cuisine ou de laboratoire, qui présente un corps de base céramique (2), qui présente au moins par sections une surface antibactérienne (4) et/ou un revêtement de surface antibactérien (3), qui contien(nen)t une proportion pondérale supérieure à 35% en poids d'oxyde de zinc (ZnO) ainsi que 0,1-20% en poids d'oxyde d'étain (SnO₂), **caractérisé par** les étapes :
- préparation d'un corps de base céramique (2),
- formation d'un revêtement de surface antibactérien (3) qui contient une proportion pondérale supérieure à 35% en poids d'oxyde de zinc et 0,1-20% en poids d'oxyde d'étain, sur le corps de base céramique (2), et/ou d'une surface antibactérienne (4), qui contient une proportion pondérale supérieure à 35% en poids d'oxyde de zinc et 0,1-20% en poids d'oxyde d'étain, du corps de base céramique (2) pour la fabrication de l'objet céramique (1), un corps de base céramique (2) non cuit étant utilisé et la formation de la surface antibactérienne (4) et/ou du revêtement de surface antibactérien (3) sur le corps de base céramique (2) non cuit étant réalisée par une cuisson à une température de cuisson dans une plage de température entre 1100°C et 1350°C.

9. Procédé selon la revendication 8, **caractérisé en ce qu'**on utilise un corps de base céramique (2) non cuit, sur lequel est appliqué au moins par sections un revêtement de base (5) et le revêtement de surface antibactérien (3) est appliqué sur le revêtement de base (5).

10. Procédé selon la revendication 9, **caractérisé en ce qu'**on utilise un corps de base céramique (2) non cuit, sur lequel est appliqué au moins par sections un revêtement de base (5) présentant une épaisseur de couche dans une plage d'épaisseurs de couche entre 0,5 mm et 3 mm, en particulier entre 1 mm et 2 mm.

11. Procédé selon la revendication 9 ou 10, **caractérisé en ce que** le revêtement de surface antibactérien (3) est appliqué sur le revêtement de base (5) en une épaisseur de couche dans une plage d'épaisseurs de couche entre 0,1 mm et 3 mm, en particulier entre 0,25 mm et 1,5 mm, de préférence entre 0,5 mm et 1 mm.

12. Procédé selon l'une quelconque des revendications 8 à 11, **caractérisé en ce que** la plage de température est située entre 1130°C et 1280°C.

13. Procédé pour la fabrication d'un objet céramique (1) sous forme d'un objet sanitaire, de cuisine ou de laboratoire, qui présente un corps de base céramique (2), qui présente au moins par sections une surface antibactérienne (4) et/ou un revêtement de surface antibactérien (3), qui contien(nen)t une proportion pondérale supérieure à 35% en poids d'oxyde de zinc (ZnO) ainsi que 0,1-20% en poids d'oxyde d'étain (SnO₂), **caractérisé par** les étapes :
- préparation d'un corps de base céramique (2),
- formation d'un revêtement de surface antibactérien (3), qui contient une proportion pondérale supérieure à 35% en poids d'oxyde de zinc et 0,1-20% en poids d'oxyde d'étain, sur le corps de base céramique (2) et/ou d'une surface antibactérienne (4), qui contient une proportion pondérale supérieure à 35% en poids d'oxyde de zinc et 0,1-20% en poids d'oxyde d'étain, du corps de base céramique (2) pour la fabrication de l'objet céramique (1), un corps de base céramique (2) précuit étant utilisé et la formation de la surface antibactérienne (4) et/ou du revêtement de surface antibactérien (3) sur le corps de base céramique (2) précuit étant réalisée par une cuisson à une température de cuisson dans une plage de température entre 650°C et 1350°C.

14. Procédé selon la revendication 13, **caractérisé en ce que** le revêtement de surface antibactérien (3) est appliqué sur le corps de base céramique (2) précuit en une épaisseur de couche dans une plage d'épaisseurs de couche entre 0,1 mm et 3 mm, en particulier entre 0,25 mm et 1,5 mm, de préférence entre 0,5 mm et 1 mm,.

15. Procédé selon la revendication 13 ou 14, **caractérisé en ce que** la plage de température est située entre 700°C et 1280°C.

16. Procédé selon l'une quelconque des revendications 8 à 15, **caractérisé en ce que** l'application du revêtement de surface antibactérien (3) est réalisée au moyen d'un revêtement sous pression, en particulier d'un revêtement par sérigraphie, par coulée, par projection, par pulvérisation, par enduction ou par immersion ou au moyen d'une combinaison d'au moins deux des procédés de revêtement mentionnés.

17. Procédé selon l'une quelconque des revendications 8 à 16, **caractérisé en ce que** la surface antibactérienne (4) et/ou le revêtement de surface antibactérien (3) est/sont formé(e)(s) en outre par addition d'argent en une proportion pondérale de 0,005-5% en poids d'argent.

18. Procédé selon l'une quelconque des revendications 8 à 17, **caractérisé en ce que** la surface antibactérienne (4) et/ou le revêtement de surface antibactérien (3) est/sont formé(e)(s) en outre par addition d'oxyde de cérium (CeO₂) en une proportion pondérale de 0,05-1% en poids d'oxyde de cérium (CeO₂).

19. Procédé selon l'une quelconque des revendications 8 à 18, **caractérisé en ce que** la surface antibactérienne (4) et/ou le revêtement de surface antibactérien (3) est/sont formé(e)(s) en outre par addition d'oxyde de titane (TiO₂) en une proportion pondérale de 0,05-1% en poids d'oxyde de titane (TiO₂).

20. Procédé selon l'une quelconque des revendications 8 à 19, **caractérisé en ce qu'**on utilise de l'oxyde de zinc particulaire, au moins 3% de la proportion totale d'oxyde de zinc utilisé présentant une grosseur de particule supérieure à 45 µm.
